# FASCICULE DE BREVET EUROPEEN

(11) **EP 4 067 122 B1**
(45) Date de publication et mention de la délivrance du brevet: **20.12.2023**
(21) Numéro de dépôt: 22165148.2
(22) Date de dépôt: 29.03.2022
(51) Int. Cl.: B60D 5/00, B61D 17/20, B62D 47/02

(54) **VÉHICULE, NOTAMMENT FERROVIAIRE, COMPRENANT UNE PASSERELLE ARTICULÉE AVEC SYSTÈME D'ATTACHE FRANGIBLE**
FAHRZEUG, INSBESONDERE SCHIENENFAHRZEUG, MIT EINER MIT GELENKEN AUSGESTATTETEN BRÜCKE MIT ZERBRECHBAREM BEFESTIGUNGSSYSTEM
VEHICLE, IN PARTICULAR A RAILWAY VEHICLE, COMPRISING AN ARTICULATED WALKWAY WITH FRANGIBLE ATTACHMENT SYSTEM

(30) Priorité: 30.03.2021 FR 2103250
(43) Date de publication de la demande: 05.10.2022
(73) Titulaire: ALSTOM Holdings, 93400 Saint-Ouen-sur-Seine (FR)
(72) Inventeur: SAMAIN, Joel, 59570 OBIES (FR); CACHEUX, Guy, 59590 RAISMES (FR); ADORA, Christophe, 59226 LECELLES (FR)
(74) Mandataire: Lavoix

(56) Documents cités:
- WO-A1-2006/002448
- FR-A1- 2 764 856
- FR-A1- 3 096 949
- GB-A- 2 515 422

## Description

La présente invention concerne un véhicule, notamment ferroviaire, du type comprenant :
- une première voiture et une deuxième voiture successives dans une direction longitudinale du véhicule, et
- une passerelle articulée adaptée pour permettre à des passagers de circuler entre la première voiture et la deuxième voiture en marchant sur la passerelle, la passerelle comprenant un premier seuil monté sur une première structure de la première voiture, un deuxième seuil monté sur une deuxième structure de la deuxième voiture, et une partie centrale reliant le premier seuil au deuxième seuil longitudinalement,
la première voiture et la deuxième voiture étant mobiles longitudinalement l'une par rapport à l'autre en cas de choc successivement entre :
- une configuration normale, dans laquelle la passerelle est dans une configuration déployée longitudinalement,
- une configuration limite, dans laquelle la première voiture et la deuxième voiture sont longitudinalement plus proches l'une de l'autre que dans la configuration normale et la passerelle (16) est dans une configuration rétractée longitudinalement, et
- une configuration rapprochée, dans laquelle la première voiture et la deuxième voiture (14) sont encore plus proches l'une de l'autre que dans la configuration limite.

Le document WO 2006/002448 A1 divulgue un tel véhicule.

Le choc est par exemple dû à une collision avec un butoir ou avec un autre véhicule. Lors d'un tel choc, des systèmes d'absorption de l'énergie s'écrasent éventuellement entre les deux structures des voitures. Toutefois, il a été observé dans certaines architectures que, même à une vitesse du véhicule faible, par exemple inférieure à 20 km/heure, des parties de la passerelle subissent des déformations permanentes et remontent dans la zone de circulation des passagers située au-dessus la passerelle.

La passerelle peut être en partie soulevée et/ou des portions de tôle peuvent constituer des obstacles ou présenter un bord saillant dans la zone de circulation. Ceci constitue un danger potentiel pour des passagers présents dans ou traversant la zone de circulation après le choc. Ces derniers peuvent tomber et/ou être blessés par les portions de tôle.

Un but de l'invention est donc réduire les risques pour les passagers pendant et à l'issue du choc.

A cet effet, l'invention a pour objet un véhicule du type décrit ci-dessus, dans lequel le premier seuil est monté glissant et fixé sur la première structure par un premier système d'attache, le premier système d'attache étant frangible et configuré pour se rompre lorsque la première voiture et la deuxième voiture passent de la configuration limite à la configuration rapprochée, le premier seuil étant adapté pour glisser par rapport à la première structure après rupture du premier système d'attache.

Selon des modes particuliers de réalisation, le véhicule comprend l'une ou plusieurs des caractéristiques suivantes, prise(s) isolément ou selon toutes les combinaisons techniquement possibles :
- le deuxième seuil est monté glissant et fixé sur la deuxième structure par un deuxième système d'attache, le deuxième système d'attache étant frangible et configuré pour se rompre lorsque la première voiture et la deuxième voiture passent de la configuration limite à la configuration rapprochée, le deuxième seuil étant adapté pour glisser par rapport à la deuxième structure après rupture du deuxième système d'attache ;
- le premier seuil et/ou le deuxième seuil est adapté pour glisser dans la direction longitudinale par rapport à la première structure et/ou à la deuxième structure respectivement ;
- le premier système d'attache et/ou le deuxième système d'attache est adapté pour se rompre alors que le premier système d'attache et/ou le deuxième système d'attache est soumis à un effort limite respectivement de la part de la première structure et/ou de la deuxième structure, l'effort limite s'appliquant également sur le premier seuil et/ou le deuxième seuil avant rupture du premier système d'attache ou du deuxième système d'attache sans déformer de manière permanente le premier seuil ni le deuxième seuil ;
- le premier système d'attache et/ou le deuxième système d'attache comprend au moins un premier plot de cisaillement et/ou au moins un deuxième plot de cisaillement respectivement reliant mécaniquement le premier seuil à la première structure, et/ou le deuxième seuil à la deuxième structure respectivement ;
- le premier seuil et la première structure forment au moins deux liaisons glissières orientées longitudinalement et espacées l'une de l'autre dans une direction transversale du véhicule sensiblement perpendiculaire à la direction longitudinale, et/ou le deuxième seuil et la deuxième structure forment au moins deux liaisons glissières orientées longitudinalement et espacées l'une de l'autre dans la direction transversale ;
- la première voiture comprend au moins un premier système absorbeur de choc monté sur la première structure, et la deuxième voiture comprend au moins un deuxième système absorbeur de choc monté sur la deuxième structure, le premier système absorbeur de choc et le deuxième système absorbeur de choc étant configurés pour buter l'un contre l'autre lorsque la première voiture et la deuxième voiture passent de la configuration limite à la configuration rapprochée ;
- le premier système absorbeur de choc et le deuxième système absorbeur de choc sont configurés pour entrer en contact l'un contre l'autre lorsque la première voiture et la deuxième voiture sont dans la configuration limite ;
- la partie centrale comprend une dalle reposant sur le premier seuil et le deuxième seuil, et un système de liaison flottante de la dalle fixé sur le premier seuil et le deuxième seuil ; et
- le premier seuil et le deuxième seuil butent longitudinalement contre la partie centrale dans la configuration rétractée de la passerelle, ou l'un contre l'autre.

L'invention sera mieux comprise à la lecture de la description qui va suivre, donnée uniquement à titre d'exemple et faite en se référant au dessin annexé, sur lequel :
- la figure 1 est une vue schématique, en coupe, partielle, d'un véhicule selon l'invention, la première voiture et la deuxième voiture étant dans la configuration normale, dans laquelle la passerelle est en configuration déployée,
- la figure 2 est une vue analogue à celle de la figure 1, la première voiture et la deuxième voiture étant dans la configuration limite, dans laquelle la passerelle est en configuration rétractée, et
- la figure 3 est une vue analogue à celles des figures 1 et 2, la première voiture et la deuxième voiture étant dans la configuration rapprochée.

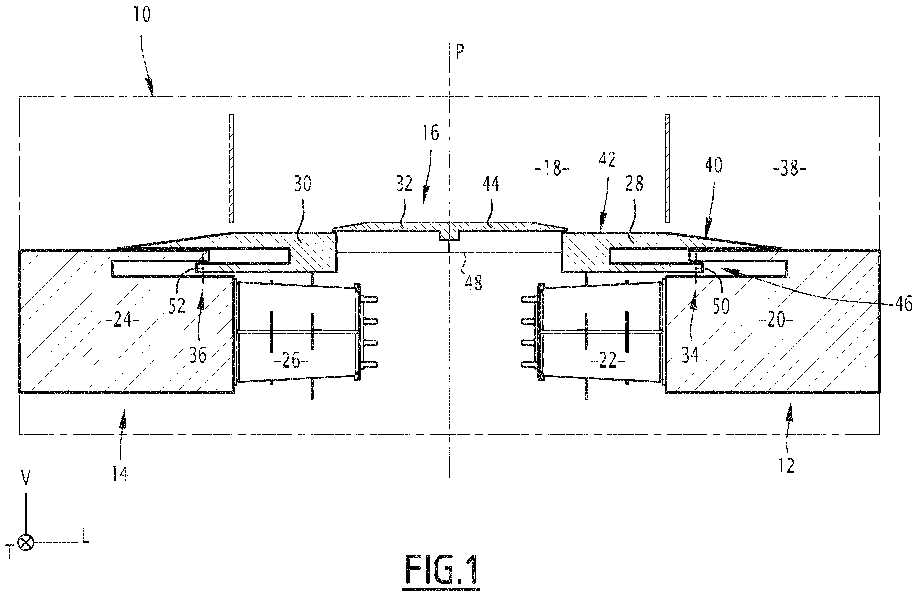

En référence aux figures 1 à 3, on décrit un véhicule 10 selon l'invention. Le véhicule y est représenté très partiellement.

Le véhicule 10 est par exemple ferroviaire. Il s'agit par exemple d'un train à grande vitesse, d'un véhicule suburbain ou d'un tramway.

En variante, le véhicule 10 est monté sur des pneumatiques.

Le véhicule 10 comprend une première voiture 12 et une deuxième voiture 14 successives dans une direction longitudinale L du véhicule, et une passerelle 16 articulée adaptée pour permettre à des passagers (non représentés) de circuler entre la première voiture 12 et la deuxième voiture 14 en marchant sur la passerelle 16, dans une zone voyageur 18 située au-dessus de la passerelle 16. Le véhicule 10 comprend éventuellement d'autres voitures (non représentées). Le véhicule 10 forme par exemple une rame.

La direction longitudinale L est aussi une direction de circulation du véhicule 10. La direction longitudinale L est sensiblement horizontale lorsque le véhicule 10 circule sur un support (non représenté) horizontal et rectiligne.

On définit aussi une direction transversale T sensiblement perpendiculaire à la direction longitudinale L, et une direction V, sensiblement perpendiculaire à la direction longitudinale L et à la direction transversale T. La direction V est sensiblement verticale lorsque le véhicule 10 circule sur un support (non représenté) horizontal et rectiligne.

La zone voyageur 18 est par exemple délimitée transversalement et vers le haut par un système à soufflets ou un garnissage (non représentés) qui s'adapte aux mouvements relatifs de la première voiture 12 par rapport à la deuxième voiture 14.

La première voiture 12 et la deuxième voiture 14 sont connectées mécaniquement l'une à l'autre par un système de couplage connu en lui-même de l'homme du métier et non représenté.

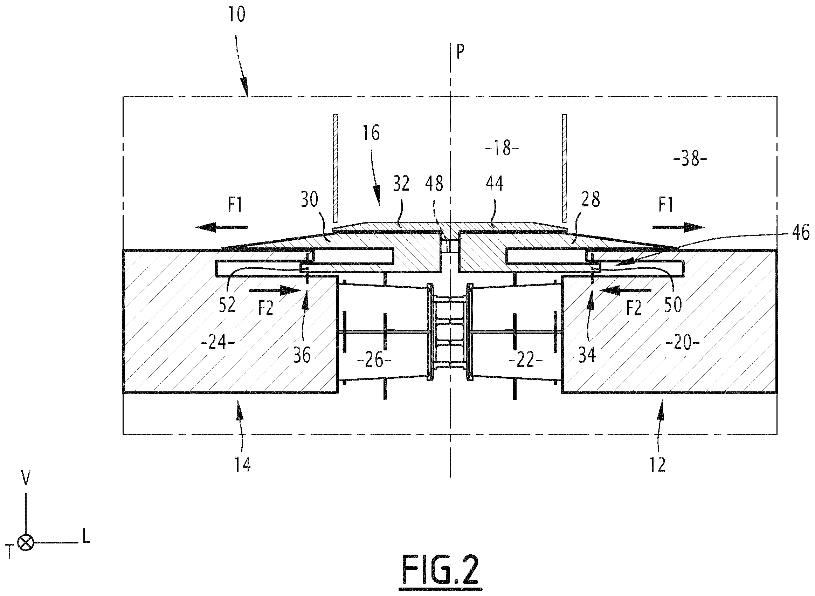

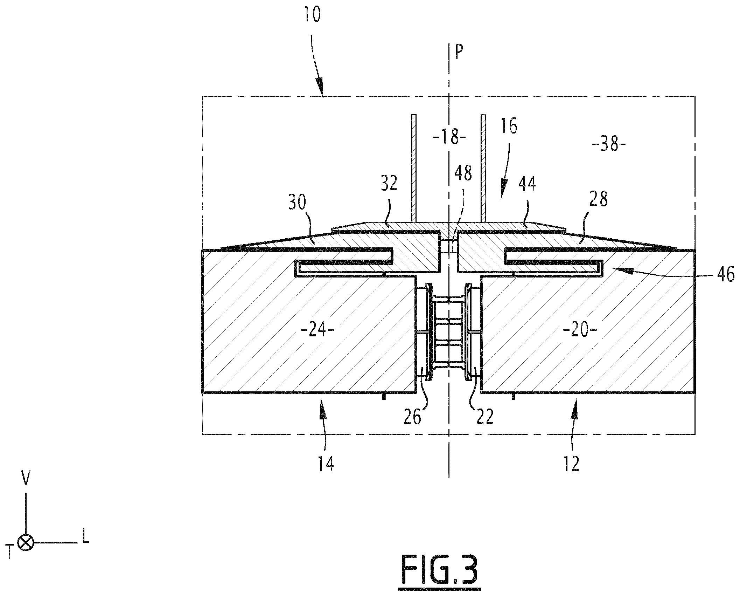

La première voiture 12 et la deuxième voiture 14 sont mobiles longitudinalement l'une par rapport à l'autre en cas de choc successivement entre une configuration normale (figure 1), dans laquelle la passerelle 16 est dans une configuration déployée longitudinalement, une configuration limite (figure 2), dans laquelle la première voiture 12 et la deuxième voiture 14 sont longitudinalement plus proches l'une de l'autre que dans la configuration normale et la passerelle 16 est dans une configuration rétractée longitudinalement, et une configuration rapprochée (figure 3), dans laquelle la première voiture 12 et la deuxième voiture 14 sont encore plus proches l'une de l'autre que dans la configuration limite.

La première voiture 12 comprend une première structure 20 (ou caisse) représentée partiellement, et avantageusement au moins un premier système absorbeur de choc 22 monté sur la première structure.

La deuxième voiture 14 comprend une deuxième structure 24 (ou caisse) représentée partiellement, et avantageusement au moins un deuxième système absorbeur de choc 26 monté sur la deuxième structure.

Le premier système absorbeur de choc 22 et le deuxième système absorbeur de choc 26 sont configurés par exemple pour buter l'un contre l'autre au plus tard lorsque la première voiture 12 et la deuxième voiture 14 passent de la configuration limite à la configuration rapprochée.

La passerelle 16 comprend un premier seuil 28 monté sur la première structure 20, un deuxième seuil 30 monté sur une deuxième structure 24, et une partie centrale 32 reliant le premier seuil au deuxième seuil longitudinalement.

Bien entendu, par « seuil », on entend ici une pièce de transition entre deux espaces, et non une valeur limite.

Dans la configuration normale, la passerelle 16 est configurée pour prendre une pluralité de configurations déployées (dont l'une est représentée sur la figure 1), afin de s'adapter aux mouvements relatifs de la deuxième voiture 14 par rapport à la première voiture 12. La passerelle 16 est notamment adaptée pour se contracter longitudinalement en cas de choc et prendre une configuration rétractée représentée sur les figures 2 et 3, dans laquelle la passerelle 16 est à son maximum de contraction longitudinale. La passerelle 16 est adaptée pour conserver cette configuration rétractée alors que la première voiture 12 et la deuxième voiture 14 passent de la configuration limite à la configuration rapprochée du fait du choc.

Dans l'exemple représenté, la passerelle 16 est symétrique par rapport à un plan P perpendiculaire à la direction longitudinale L.

Le premier seuil 28 et le deuxième seuil 30 sont montés glissants sur la première structure 20 et sur la deuxième structure 24 respectivement, et sont fixés par un premier système d'attache 34 et un deuxième système d'attache 36 frangibles configurés pour rompre lorsque la première voiture 12 et la deuxième voiture 14 passent de la configuration limite à la configuration rapprochée. Le premier seuil 28 est fixé sur la première structure 20 avant la rupture du premier système d'attache 34, et le deuxième seuil 30 est fixé sur la deuxième structure 22 avant la rupture du deuxième système d'attache 36.

En variante (non représentée), seul l'un du premier système d'attache 34 et du deuxième système d'attache 36 est frangible.

Par « montés glissants », on entend que, lorsque le premier système d'attache 34 ou le deuxième système d'attache 36 a rompu, le premier seuil 28 ou le deuxième seuil 30 respectivement est adapté pour glisser (flèches F1 sur la figure 2) dans ou sur la première structure 20 ou la deuxième structure 24 respectivement, à mesure que la première voiture 12 et la deuxième voiture 14 se rapprochent l'une de l'autre à partir de la configuration limite.

Selon un mode particulier de réalisation, le premier seuil 28 et le deuxième seuil 30 sont adaptés pour glisser dans la direction longitudinale L par rapport à la première structure 20 et la deuxième structure 24.

Comme la passerelle 16 est symétrique, seul le premier seuil 28 et le premier système d'attache 34 seront décrits ci-après.

Le premier seuil 28 forme par exemple un marchepied entre un couloir 38 défini par la première voiture 12 et la partie centrale 32 de la passerelle 16. Le premier seuil 28 repose sur la première structure 20. Le premier seuil 28 forme par exemple un plan incliné 40 par rapport à la direction longitudinale L, et une partie supérieure 42 sensiblement perpendiculaire à la direction V, sur laquelle repose une dalle 44 de la partie centrale 32 de la passerelle 16.

Selon un mode particulier de réalisation, le premier seuil 28 et le deuxième seuil 30 butent longitudinalement contre la partie centrale 32 dans la configuration rétractée de la passerelle 16, ou l'un contre l'autre.

Le premier seuil 28 et la première structure 20 forment par exemple au moins deux liaisons glissières 46 (dont l'une est représentée sur les figures, l'autre étant avantageusement analogue) orientées longitudinalement et espacées l'une de l'autre dans la direction transversale T.

La partie centrale 32 de la passerelle 16 comprend la dalle 44 reposant sur le premier seuil 28 et le deuxième seuil 30, et un système de liaison 48 flottante de la dalle 44 fixé sur le premier seuil 28 et le deuxième seuil 30.

Un tel système de liaison 48 est connu de l'homme du métier. Par exemple, le système de liaison 48 comprend deux mécanismes en ciseaux (non représentés) adaptés pour maintenir la dalle 44 longitudinalement entre le premier seuil 28 et le deuxième seuil 30 indépendamment de la position de la première voiture 12 et de la deuxième voiture 14 l'une par rapport à l'autre.

Le premier système de d'attache 34 et le deuxième système de d'attache 36 sont respectivement adaptés pour se rompre à un effort limite (flèches F2 sur la figure 2), ledit effort limite étant supérieur à l'effort engendré dans les conditions normales d'exploitation respectivement de la part de la première structure 20 et de la deuxième structure 24, afin que le premier système de d'attache 34 et le deuxième système de d'attache 36 se rompent uniquement en cas de collision.

Par exemple, le premier système d'attache 34 et le deuxième système d'attache 36 comprennent respectivement au moins un premier plot de cisaillement 50 et au moins un deuxième plot de cisaillement 52 reliant mécaniquement le premier seuil 28 à la première structure 20, et le deuxième seuil 30 à la deuxième structure 24 respectivement.

Le fonctionnement du véhicule 10 découle de sa structure et va maintenant être brièvement décrit.

En fonctionnement normal, la première voiture 12 et la deuxième voiture 14 sont dans la configuration normale (figure 1). La passerelle 16 est dans l'une des configurations déployées, telle que celle représentée sur la figure 1. Le premier seuil 28 reste fixé sur la première structure 20 grâce au premier système d'attache 34. De même, le deuxième seuil 30 reste fixé sur la deuxième structure 24 grâce au deuxième système d'attache 36. En effet, les efforts exercés par la première structure 20 sur le premier système d'attache 34 et par la deuxième structure 24 sur le deuxième système d'attache 36 ne dépassent pas l'effort limite.

La dalle 44 glisse à la fois sur le premier seuil 28 et le deuxième seuil 30, et reste maintenue par le système de liaison 48.

Puis, un choc longitudinal se produit sur le véhicule 10. Par exemple, le véhicule 10 heurte un butoir (non représenté). La première voiture 12 et la deuxième voiture 14 se rapprochent l'une de l'autre et atteignent la configuration limite représentée sur la figure 2. La passerelle 16 se contracte longitudinalement depuis la configuration déployée jusqu'à la configuration rétractée (figure 2).

Ensuite, la première voiture 12 et la deuxième voiture 14 continuent de se rapprocher l'une de l'autre pour quitter la configuration limite. Au même moment, les efforts exercés par la première structure 20 sur le premier système d'attache 34 et par la deuxième structure 24 sur le deuxième système d'attache 36 augmentent très rapidement et atteignent l'effort limite provoquant la rupture du premier système d'attache 34 et du deuxième système d'attache 36.

Avant la rupture, l'effort limite s'applique également sur le premier seuil 28 et le deuxième seuil 30, l'effort limite étant suffisamment faible pour ne pas déformer de manière permanente le premier seuil 28, le deuxième seuil 30, ni la dalle 44.

Après la rupture, le premier seuil 28 et le deuxième seuil 30 ne sont plus fixés sur la première structure 20 et la deuxième structure 24, mais simplement montés glissants. Les efforts longitudinaux appliqués sur les seuils diminuent alors de manière très importante. A mesure que la première voiture 12 et la deuxième voiture 14 passent de la configuration limite à la configuration rapprochée, le premier seuil 28 glisse dans ou sur la première structure 20 et le deuxième seuil 30 glisse dans ou sur la deuxième structure 24 sans se déformer, sans que la passerelle 16 ne soit par exemple soulevée par des phénomènes de flambement.

En variante, si le premier système d'attache 34 et le deuxième système d'attache 36 n'ont pas tout à fait la même limite à la rupture, l'un, par exemple le premier système d'attache 34, va rompre avant le deuxième système d'attache 36, autorisant le premier seuil 28 à glisser par rapport à la première structure 20. Puis, la première voiture 12 et la deuxième voiture 14 s'étant encore rapprochées, les efforts exercés sur le deuxième système d'attache 36 dépassent son effort limite, et le deuxième système d'attache 36 rompt, autorisant le deuxième seuil 30 à glisser.

On comprend que le premier système d'attache 34 et le deuxième système d'attache 36 sont suffisamment résistants pour fixer le premier seuil 28 et le deuxième seuil 30 en l'absence de choc longitudinal significatif, et suffisamment faibles pour se rompre en cas de choc et empêcher que les efforts longitudinaux subis par la passerelle 16 atteignent des valeurs entraînant des déformations permanentes de la passerelle 16 susceptibles de créer un danger pour les passagers.

Ainsi, grâce aux caractéristiques décrite ci-dessus, les risques pour les passagers pendant et à l'issue d'un choc sont réduits.

## Revendications

1. Véhicule (10), notamment ferroviaire, comprenant :
- une première voiture (12) et une deuxième voiture (14) successives dans une direction longitudinale (L) du véhicule (10), et
- une passerelle (16) articulée adaptée pour permettre à des passagers de circuler entre la première voiture (12) et la deuxième voiture (14) en marchant sur la passerelle (16), la passerelle (16) comprenant un premier seuil (28) monté sur une première structure (20) de la première voiture (12), un deuxième seuil (30) monté sur une deuxième structure (24) de la deuxième voiture (14), et une partie centrale (32) reliant le premier seuil (28) au deuxième seuil (30) longitudinalement,
la première voiture (12) et la deuxième voiture (14) étant mobiles longitudinalement l'une par rapport à l'autre en cas de choc successivement entre :
- une configuration normale, dans laquelle la passerelle (16) est dans une configuration déployée longitudinalement,
- une configuration limite, dans laquelle la première voiture (12) et la deuxième voiture (14) sont longitudinalement plus proches l'une de l'autre que dans la configuration normale et la passerelle (16) est dans une configuration rétractée longitudinalement, et
- une configuration rapprochée, dans laquelle la première voiture (12) et la deuxième voiture (14) sont encore plus proches l'une de l'autre que dans la configuration limite,
**caractérisé en ce que** le premier seuil (28) est monté glissant et fixé sur la première structure (20) par un premier système d'attache (34), le premier système d'attache (34) étant frangible et configuré pour se rompre lorsque la première voiture (12) et la deuxième voiture (14) passent de la configuration limite à la configuration rapprochée, le premier seuil (28) étant adapté pour glisser par rapport à la première structure (20) après rupture du premier système d'attache (34).

2. Véhicule selon la revendication 1, dans lequel le deuxième seuil (30) est monté glissant et fixé sur la deuxième structure (24) par un deuxième système d'attache (36), le deuxième système d'attache (36) étant frangible et configuré pour se rompre lorsque la première voiture (12) et la deuxième voiture (14) passent de la configuration limite à la configuration rapprochée, le deuxième seuil (30) étant adapté pour glisser par rapport à la deuxième structure (24) après rupture du deuxième système d'attache (36).

3. Véhicule (10) selon la revendication 1 ou 2, dans lequel le premier seuil (28) et/ou le deuxième seuil (30) est adapté pour glisser dans la direction longitudinale (L) par rapport à la première structure (20) et/ou à la deuxième structure (24) respectivement.

4. Véhicule (10) selon l'une quelconque des revendications 1 à 3, dans lequel le premier système d'attache (34) et/ou le deuxième système d'attache (36) est adapté pour se rompre alors que le premier système d'attache (34) et/ou le deuxième système d'attache (36) est soumis à un effort limite (F2) respectivement de la part de la première structure (20) et/ou de la deuxième structure (24), l'effort limite (F2) s'appliquant également sur le premier seuil (28) et/ou le deuxième seuil (30) avant rupture du premier système d'attache (34) ou du deuxième système d'attache (36) sans déformer de manière permanente le premier seuil (28) ni le deuxième seuil (30).

5. Véhicule (10) selon l'une quelconque des revendications 1 à 4, dans lequel le premier système d'attache (34) et/ou le deuxième système d'attache (36) comprend au moins un premier plot de cisaillement (50) et/ou au moins un deuxième plot de cisaillement (52) respectivement reliant mécaniquement le premier seuil (28) à la première structure (20), et/ou le deuxième seuil (30) à la deuxième structure (24) respectivement.

6. Véhicule (10) selon l'une quelconque des revendications 1 à 5, dans lequel :
- le premier seuil (28) et la première structure (20) forment au moins deux liaisons glissières (46) orientées longitudinalement et espacées l'une de l'autre dans une direction transversale (T) du véhicule (10) sensiblement perpendiculaire à la direction longitudinale (L), et/ou
- le deuxième seuil (30) et la deuxième structure (24) forment au moins deux liaisons glissières (46) orientées longitudinalement et espacées l'une de l'autre dans la direction transversale (T).

7. Véhicule (10) selon l'une quelconque des revendications 1 à 6, dans lequel :
- la première voiture (12) comprend au moins un premier système absorbeur de choc (22) monté sur la première structure (20), et
- la deuxième voiture (14) comprend au moins un deuxième système absorbeur de choc (26) monté sur la deuxième structure (24),
le premier système absorbeur de choc (22) et le deuxième système absorbeur de choc (26) étant configurés pour buter l'un contre l'autre lorsque la première voiture (12) et la deuxième voiture (14) passent de la configuration limite à la configuration rapprochée.

8. Véhicule (10) selon la revendication 7, dans lequel le premier système absorbeur de choc (22) et le deuxième système absorbeur de choc (26) sont configurés pour entrer en contact l'un contre l'autre lorsque la première voiture (12) et la deuxième voiture (14) sont dans la configuration limite.

9. Véhicule (10) selon l'une quelconque des revendications 1 à 8, dans lequel la partie centrale (32) comprend une dalle (44) reposant sur le premier seuil (28) et le deuxième seuil (30), et un système de liaison flottante (48) de la dalle (44) fixé sur le premier seuil (28) et le deuxième seuil (30).

10. Véhicule (10) selon l'une quelconque des revendications 1 à 9, dans lequel le premier seuil (28) et le deuxième seuil (30) butent longitudinalement contre la partie centrale (32) dans la configuration rétractée de la passerelle (16), ou l'un contre l'autre.

## Patentansprüche

1. Fahrzeug (10), insbesondere Schienenfahrzeug, umfassend:
- einen ersten Wagen (12) und einen zweiten Wagen (14), die in einer Längsrichtung (L) des Fahrzeugs (10) aufeinander folgen, und
- eine gelenkige Brücke (16), die so beschaffen ist, dass sie es Passagieren ermöglicht, sich zwischen dem ersten Wagen (12) und dem zweiten Wagen (14) zu bewegen, indem sie über die Brücke (16) laufen, wobei die Brücke (16) eine erste Schwelle (28) umfasst, die auf einer ersten Struktur (20) des ersten Wagens (12) angebracht ist, eine zweite Schwelle (30), die auf einer zweiten Struktur (24) des zweiten Wagens (14) angebracht ist, und einen Mittelteil (32), der die erste Schwelle (28) mit der zweiten Schwelle (30) längs verbindet,
wobei der erste Wagen (12) und der zweite Wagen (14) bei einem Stoß längs relativ zueinander nacheinander beweglich sind zwischen:
- einer normalen Konfiguration, bei der die Brücke (16) in einer längs ausgefahrenen Konfiguration ist,
- einer Grenzkonfiguration, in der der erste Wagen (12) und der zweite Wagen (14) längs näher beieinander liegen als in der Normalkonfiguration und die Brücke (16) in einer längs eingezogenen Konfiguration ist, und
- einer angenäherten Konfiguration, in der der erste Wagen (12) und der zweite Wagen (14) noch näher beieinander als in der Grenzkonfiguration sind,
**dadurch gekennzeichnet, dass** die erste Schwelle (28) gleitend angebracht und auf der ersten Struktur (20) durch ein erstes Befestigungssystem (34) befestigt ist, wobei das erste Befestigungssystem (34) zerbrechbar und derart ausgelegt ist, dass es bricht, wenn der erste Wagen (12) und der zweite Wagen (14) aus der Grenzkonfiguration in die angenäherte Konfiguration wechseln, wobei die erste Schwelle (28) geeignet ist, nach dem Bruch des ersten Befestigungssystems (34) relativ zu der ersten Struktur (20) zu gleiten.

2. Fahrzeug nach Anspruch 1, wobei die zweite Schwelle (30) gleitend angebracht und auf der zweiten Struktur (24) durch ein zweites Befestigungssystem (36) befestigt ist, wobei das zweite Befestigungssystem (36) zerbrechbar und derart ausgelegt ist, dass es bricht, wenn der erste Wagen (12) und der zweite Wagen (14) aus der Grenzkonfiguration in die angenäherte Konfiguration wechseln, wobei die zweite Schwelle (30) geeignet ist, nach dem Bruch des zweiten Befestigungssystems (36) relativ zu der zweiten Struktur (24) zu gleiten.

3. Fahrzeug (10) nach Anspruch 1 oder 2, wobei die erste Schwelle (28) und/oder die zweite Schwelle (30) geeignet ist, in der Längsrichtung (L) jeweils relativ zu der ersten Struktur (20) und/oder zu der zweiten Struktur (24) zu gleiten.

4. Fahrzeug (10) nach einem der Ansprüche 1 bis 3, wobei das erste Befestigungssystem (34) und/oder das zweite Befestigungssystem (36) geeignet ist zu brechen, während das erste Befestigungssystem (34) und/oder das zweite Befestigungssystem (36) einer Grenzkraft (F2) jeweils von Seiten der ersten Struktur (20) und/oder der zweiten Struktur (24) unterliegt, wobei die Grenzkraft (F2) auch auf die erste Schwelle (28) und/oder die zweite Schwelle (30) ausgeübt wird, bevor das erste Befestigungssystem (34) und/oder das zweite Befestigungssystem (36) bricht, ohne die erste Schwelle (28) noch die zweite Schwelle (30) dauerhaft zu verformen.

5. Fahrzeug (10) nach einem der Ansprüche 1 bis 4, wobei das erste Befestigungssystem (34) und/oder das zweite Befestigungssystem (36) mindestens einen ersten Scherbolzen (50) und/oder mindestens einen zweiten Scherbolzen (52) umfasst, der jeweils die erste Schwelle (28) mit der ersten Struktur (20) und/oder die zweite Schwelle (30) mit der zweiten Struktur (24) mechanisch verbindet.

6. Fahrzeug (10) nach einem der Ansprüche 1 bis 5, wobei:
- die erste Schwelle (28) und die erste Struktur (20) mindestens zwei Gleitverbindungen (46) bilden, die längs ausgerichtet sind und in einer Querrichtung (T) des Fahrzeugs (10), die im Wesentlichen senkrecht zur Längsrichtung (L) verläuft, voneinander beabstandet sind, und/oder
- die zweite Schwelle (30) und die zweite Struktur (24) mindestens zwei Gleitverbindungen (46) bilden, die längs ausgerichtet und in der Querrichtung (T) voneinander beabstandet sind.

7. Fahrzeug (10) nach einem der Ansprüche 1 bis 6, wobei:
- der erste Wagen (12) mindestens ein erstes Stoßdämpfersystem (22) umfasst, das an der ersten Struktur (20) angebracht ist, und
- der zweite Wagen (14) mindestens ein zweites Stoßdämpfersystem (26) umfasst, das an der zweiten Struktur (24) angebracht ist,
wobei das erste Stoßdämpfersystem (22) und das zweite Stoßdämpfersystem (26) derart ausgelegt sind, dass sie aneinander anstoßen, wenn der erste Wagen (12) und der zweite Wagen (14) aus der Grenzkonfiguration in die angenäherte Konfiguration wechseln.

8. Fahrzeug (10) nach Anspruch 7, wobei das erste Stoßdämpfersystem (22) und das zweite Stoßdämpfersystem (26) derart ausgelegt sind, dass sie sich gegenseitig berühren, wenn der erste Wagen (12) und der zweite Wagen (14) in der Grenzkonfiguration sind.

9. Fahrzeug (10) nach einem der Ansprüche 1 bis 8, wobei der Mittelteil (32) eine Platte (44) umfasst, die auf der ersten Schwelle (28) und der zweiten Schwelle (30) ruht, und ein schwimmendes Verbindungssystem (48) der Platte (44), das an der ersten Schwelle (28) und der zweiten Schwelle (30) befestigt ist.

10. Fahrzeug (10) nach einem der Ansprüche 1 bis 9, wobei die erste Schwelle (28) und die zweite Schwelle (30) in der eingefahrenen Konfiguration der Brücke (16) längs am Mittelteil (32) oder gegeneinander anstoßen.

## Claims

1. A vehicle (10), in particular a railway vehicle, comprising:
- a first car (12) and a second car (14) in succession in a longitudinal direction (L) of the vehicle (10), and
- an articulated walkway (16) adapted to enable passengers to travel between the first car (12) and the second car (14) by walking on the walkway (16), the walkway (16) comprising a first ledge (28) mounted on a first structure (20) of the first car (12), a second ledge (30) mounted on a second structure (24) of the second car (14), and a central portion (32) connecting the first ledge (28) to the second ledge (30) longitudinally,
the first car (12) and the second car (14) being movable longitudinally with respect to each other in the event of a successive impact between:
- a normal configuration, in which the walkway (16) is in a longitudinally deployed configuration,
- a limit configuration, in which the first car (12) and the second car (14) are longitudinally closer to each other than in the normal configuration and the walkway (16) is in a longitudinally retracted configuration, and
- a close configuration, in which the first car (12) and the second car (14) are even closer together than in the limit configuration,
**characterised in that** the first ledge (28) is mounted so as to slide and is fixed to the first structure (20) by a first attachment system (34), the first attachment system (34) being breakable and configured to break when the first car (12) and the second car (14) pass from the limit configuration to the close configuration, the first ledge (28) being adapted to slide relative to the first structure (20) after the breaking of the first attachment system (34).

2. A vehicle as claimed in claim 1, wherein the second ledge (30) is mounted to slide and is secured to the second structure (24) by a second attachment system (36), the second attachment system (36) being breakable and configured to break when the first car (12) and the second car (14) move from the limit configuration to the close configuration, the second ledge (30) being adapted to slide relative to the second structure (24) after breaking of the second attachment system (36).

3. A vehicle (10) according to claim 1 or 2, wherein the first ledge (28) and/or the second ledge (30) is adapted to slide in the longitudinal direction (L) relative to the first structure (20) and/or the second structure (24) respectively.

4. A vehicle (10) according to any one of claims 1 to 3, in which the first attachment system (34) and/or the second attachment system (36) is adapted to break while the first attachment system (34) and/or the second attachment system (36) is subjected to a limiting force (F2) from the first structure (20) and/or the second structure (24), the limiting force (F2) also being applied to the first ledge (28) and/or the second ledge (30) before the first attachment system (34) or the second attachment system (36) breaks, without permanently deforming the first ledge (28) or the second ledge (30).

5. A vehicle (10) according to any one of claims 1 to 4, in which the first attachment system (34) and/or the second attachment system (36) comprises at least one first shear stud (50) and/or at least one second shear stud (52) respectively, mechanically connecting the first ledge (28) to the first structure (20), and/or the second ledge (30) to the second structure (24) respectively.

6. A vehicle (10) according to any of claims 1 to 5, wherein:
- the first ledge (28) and the first structure (20) form at least two sliding connections (46) oriented longitudinally and spaced apart in a transverse direction (T) of the car (10) substantially perpendicular to the longitudinal direction (L), and/or
- the second ledge (30) and the second structure (24) form at least two sliding connections (46) oriented longitudinally and spaced apart in the transverse direction (T).

7. A vehicle (10) according to any of claims 1 to 6, wherein:
- the first car (12) comprises at least a first shock absorber system (22) mounted on the first structure (20), and
- the second car (14) comprises at least a second shock absorber system (26) mounted on the second structure (24),
the first shock absorber system (22) and the second shock absorber system (26) being configured to abut each other when the first car (12) and the second car (14) move from the limit configuration to the close configuration.

8. A vehicle (10) according to claim 7, wherein the first shock absorber system (22) and the second shock absorber system (26) are configured to come into contact with each other when the first car (12) and the second car (14) are in the limit configuration.

9. A vehicle (10) according to any one of claims 1 to 8, in which the central part (32) comprises a slab (44) resting on the first ledge (28) and the second ledge (30), and a floating connection system (48) of the slab (44) fixed to the first ledge (28) and the second sill (30).

10. A vehicle (10) according to any one of claims 1 to 9, in which the first ledge (28) and the second ledge (30) abut longitudinally against the central part (32) in the retracted configuration of the walkway (16), or against each other.
